# EUROPÄISCHE PATENTSCHRIFT

(11) **EP 0 502 446 B1**
(45) Veröffentlichungstag und Bekanntmachung des Hinweises auf die Patenterteilung: **20.11.1996**
(21) Anmeldenummer: 92103483.1
(22) Anmeldetag: 28.02.1992
(51) Int. Cl.: H04Q 7/38, H04L 9/32, G07F 7/08

(54) **Einrichtung zur Sicherung von Bedienungsvorgängen in einem Mobilfunknetz**
Apparatus to secure operations in a mobile radio network
Dispositif pour sécuriser les traitements dans un réseau radio-mobile

(30) Priorität: 05.03.1991 DE 4107005
(43) Veröffentlichungstag der Anmeldung: 09.09.1992
(73) Patentinhaber: SIEMENS AKTIENGESELLSCHAFT, 80333 München (DE)
(72) Erfinder: Mahner, Helmut, Dipl.-Ing., W-8023 Pullach (DE)

(56) Entgegenhaltungen:
- NTZ NACHRICHTENTECHNISCHE ZEITSCHRIFT Bd. 43, Nr. 5, Mai 1990, BERLIN (DE), Seiten 380-385. FUHRMANN: 'Intelligente Vermittlungsfunktionen für Mobilkommunikationsnetze - Teil 2'
- COMMUNICATION & TRANSMISSION Nr.2, 1989, Seiten 5-22 DUNOGUE ET AL:"DU CONCEPT A L'APPLICATION DU RESEAU INTELLIGENT - Architecture et équipments d'Alcatel"

## Beschreibung

Die Erfindung bezieht sich auf ein Verfahren zur Sicherung von Bedienungsvorgängen in einem Mobilfunknetz mit Einrichtungen für die Regelung der Kommunikation zwischen Mobilvermittlungseinrichtungen und Datenbanken im Mobilvermittlungsnetz zur Steuerung des mobilen Netzzugangs von Benutzerstationen sowie für die Authentifikation des Teilnehmers und Speicherung der erforderlichen geheimen Kommunikationsdaten beim Teilnehmer. Dabei ist zur Sicherung der Gespräche bzw. Datenverbindungen, die von den Teilnehmern über die Funkstrecke geführt werden, in neueren Mobilfunksystemen ein teilnehmerspezifischer Schlüssel in zwei gesicherten Bereichen vorgesehen, nämlich dem Authentisierungszentrum (AUC) am Heimatort des Teilnehmers und dem SIM des Teilnehmers, einem intelligenten Modul (SIM = Subscriber Identity Module), das der Teilnehmer in beliebige Mobilfunkgeräte einsetzen kann. Aus beiden Bereichen kann der teilnehmerspezifische Schlüssel nicht entnommen, ausgelesen oder sonst ermittelt werden. Ein weiteres Merkmal dieses Systems ist ein Einbuchungsantrag des Teilnehmers an einem beliebigen Ort (ggf. auch im Ausland) unter Angabe seiner internationalen Teilnehmernummer, aus der der Heimatort hervorgeht und dessen Weiterleitung an das Authentisierungszentrum über das Zeichengabenetz erfolgt.

Der Versand vom Authentisierungszentrum an die örtliche Vermittlung (MSC/VLR) am beliebigen Ort des Teilnehmers erfolgt in der Weise, daß aus einer Zufallszahl RAND (als Abfrageantwort) mittels des teilnehmerspezifischen Schlüssels ein Antwortcode (SRES) sowie ebenfalls aus der Zufallszahl und dem teilnehmerspezifischen Schlüssel ein gegebenenfalls für die Gesprächsverbindung zu verwendender Schlüssel (KC) errechnet wird. Die nächsten Schritte sind die Abfrage des Teilnehmers mit der Zufallszahl (RAND) durch die örtliche Vermittlung und die Errechnung des Antwortcodes (SRES) und des Schlüssels (KC) im Subscriber Identity Module, das Absenden des Antwortcodes an die örtliche Vermittlung und Abgabe des Schlüssels (KC) an das eigene Mobilfunkgerät, der Vergleich der beiden erhaltenen Antwortcodes in der Vermittlung und bei Übereinstimmung Zulassung der Einbuchung sowie die Verschlüsselung der Funkgespräche des Teilnehmers mit dem Schlüssel (KC), der in der Vermittlung und im Mobilfunkgerät unabhängig voneinander bekannt ist. Ein solches Verfahren ist im wesentlichen durch den Artikel "Intelligente Vermittlungsfunktionen für Mobilkommunikationsnetze" von W. Fuhrmann, erschienen in NTZ, Bd. 43 (1990) Mai, No. 5, Seiten 380 bis 385, bekannt.

Ein solches Sicherungssystem dient also der Sicherung von Gesprächen bzw. Datenverbindungen, die von den Teilnehmern über die Funkstrecke geführt werden. Es soll jedoch auch erreicht werden, in einem Mobilfunknetz die Bedienungsvorgänge zu sichern. Dies ist beispielsweise erforderlich, damit Verkaufsstellen (Händler), die die Dienste eines Mobilfunk-Netzbetreibers an Teilnehmer vermitteln, die Möglichkeit erhalten, diese Teilnehmer selbst und mit sofortiger Wirkung in den Vermittlungsstellen des Betreibers einzurichten. Dazu ist es nötig, den dem Teilnehmer als elektronische Berechtigungskarte dienenden Subscriber Identity Module (SIM) zu personalisieren, vom Netzbetreiber gegebenenfalls nach Bonitätsprüfung elektronisch die Zulassung des neuen Teilnehmers zu erhalten und seine Daten an das Rechnungswesen des Netzbetreibers zu übermitteln sowie den Teilnehmer technisch, d. h mit seiner Rufnummer und seinen individuellen Berechtigungen in der zuständigen Heimatverwaltung (HLR) einzurichten und freizugeben.

Wegen der erheblichen wirtschaftlichen Bedeutung dieses über ein öffentliches Wählnetz erfolgenden Vorganges sind entsprechende Sicherheitsvorkehrungen zu treffen. Dies zu schaffen und auch die Sicherheit innerhalb des internen Betriebes des Netzbetreibers, in dem Zugriffe auf Datenbanken durch das Personal ebenfalls der Zulassung unterliegen, zu verbessern, ist Aufgabe der Erfindung.

Diese Aufgabe wird gemäß der Erfindung mit einem Verfahren gelöst, bei dem unter Verwendung von Elementen für die Sicherung der Funkübertragung für zusätzlich zu dem eine Berechtigungskarte (SIM-Subscriber Identity Module) aufweisenden Teilnehmer zur Bedienung berechtigte Personen (Drittpersonen) eine Chip-Karte als Berechtigungsausweis vorgesehen ist, auf der die Rufnummer als Heimatort ein fiktives Authentisierungszentrum (AUC) aufweist, das an alle EDV-Anlagen des Netzbetreibers angeschlossen ist und diese in die Lage versetzt, durch Vergleich eines Antwortcodes SRES, der sich beim Versand eines Einbuchungsantrags vom Authentisierungszentrum an eine örtliche Vermittlung durch Aussenden einer Zufallszahl als Abfragewort und daraus folgende Errechnung mit einem teilnehmerspezifischen Schlüssel ergibt, und eines weiteren Antwortcodes SRES, der bei der Abfrage des Teilnehmers mit einer Zufallszahl durch die örtliche Vermittlung und Errechnung im SIM (Subscriber Identity Module) des Teilnehmers entsteht, die Identität der berechtigten Person zu prüfen und den für eine Gesprächsverbindung zu benutzenden Schlüssel (KC) bereitstellt für die Verwendung durch das Terminal der berechtigten Person zur Durchführung der von ihr vorzunehmenden Transaktionen.

Vorteilhafte Ausgestaltungen und Weiterbildungen des Erfindungsgegenstandes sind in den Unteransprüchen angegeben.

Nachstehend wird die Erfindung näher erläutert.

Der Erfindung liegt der Gedanke zugrunde, die für die Sicherung der Funkübertragung vorgesehenen Einrichtungen auch für die Sicherung von Bedienungsvorgängen zu benutzen. Hierfür erhalten Angestellte, autorisierte Händler und sonstige zur Bedienung berechtigte Personen, nachfolgend jeweils als Drittpersonen bezeichnet, eine Chip-Karte als Berechtigungsausweis, die genau einem Subscriber Identity Module (SIM) entspricht. Die Rufnummer weist als Heimatort ein fiktives (logisches) Authentisierungszentrum (AUC) aus, das an alle EDV-Anlagen des Netzbetreibers angeschlossen ist und die Autorisierung durchführt. An die Stelle der örtlichen Vermittlung (MSC/VLR) tritt dasjenige Rechenzentrum bzw. derjenige Datenverarbeitungsprozeß des Netzbetreibers, zu dem die Drittperson Zugang zu erhalten versucht. Das logische Authentisierungszentrum (Betriebs-Authentisierungszentrum BAUC) versetzt das Rechenzentrum bzw. den DV-Prozeß in die Lage, in der vorstehend beschriebenen Weise - durch Vergleich der Antwortcodes SRES -die Identität der Drittperson zu prüfen und stellt den Schlüssel KC bereit, den das Terminal der Drittperson für die folgende Transaktion verwenden wird. Das Rechenzentrum kann für die mit ihm zusammenarbeitenden Drittpersonen Sätze von RAND (Zufallszahl), SRES (Antwortcodes) und KC (Schlüssel) vorrätig halten, so daß nicht bei jeder Transaktion beim Betriebs-Authentisierungszentrum rückgefragt werden muß.

Das Betriebs-Authentisierungszentrum (BAUC) verwaltet alle Zugangsberechtigungen zu EDV-Verfahren und die individuellen Schlüssel KI der berechtigten Personen (Drittpersonen). Es kann zentral und gesichert untergebracht werden, während die einzelnen EDV-Anlagen verteilt in regionalen Zentren sind und die berechtigten Personen sich mit ihnen von einem beliebigen Ort aus über ein beliebiges Netz, vorzugsweise auch ein öffentliches Wählnetz wie das Telefonnetz, das ISDM, das Btx-Netz oder dergl. in Verbindung setzen.

Der Fall der Erreichbarkeit des Betriebs-Authentisierungszentrums über das Zeichengabenetz führt dazu, daß der Berechtigungsausweis der Drittperson auch in einem Mobilfunkgerät als normales Subscriber Identity Module verwendbar wird. Die Authentisierungsanfrage erreicht entsprechend dar Rufnummer das Betriebs-Authentisierungszentrum (BANC). Die berechtigte Person kann dann ein normales Mobilfunkgespräch führen oder aber das gewünschte EDV-Zentrum über das Mobilfunknetz erreichen. Dabei lassen sich Kriterien definieren, wie die vom Betriebs-Authentisierungszentrum festgestellte Berechtigung dieses mobilen Sonderteilnehmers dem ausgewählten Prozeß mitgeteilt wird (beispielsweise durch Zugehörigkeit des Teilnehmers zu einer geschlossenen Benutzergruppe).

Zur elektronischen Einbuchung bzw. Änderung von Teilnehmerdaten hat sich die berechtigte Person (Drittperson) zunächst - wie vorhergehend beschrieben - auszuweisen, dann wird der elektronische Teilnehmer-Einrichtungsprozeß zugelassen. Es wird sodann das Subscriber Identity Module des betreffenden Teilnehmers vorgelegt. Dies kann im zeitlichen Wechsel oder - wenn das verwendete Terminal zwei Leseeinrichtungen hat - auch gleichzeitig mit dem Berechtigungsausweis der berechtigten Person erfolgen. Damit ist die Gewähr gegeben, daß bei neuen Teilnehmern die Zuordnung des zu personalisierenden, vorpersonalisierten Subsriber Identity Module (SIM) und der darin enthaltenen Teilnehmernummer (IMSI) zu den Berechtigungen und zur Person des Teilnehmers fehlerfrei gegeben ist und daß bei der Änderung von Teilnehmerdaten der Teilnehmer selbst sein SIM für die Änderung vorgelegt hat.

Die Überprüfung des Teilnehmer-SIM kann sich auf das Lesen der IMSI beschränken. Bei Vorhandensein einer Zeichengabeverbindung ist es auch denkbar, daß der Einrichtungsprozeß - wiederum als örtliche Vermittlung (MSC/VLR) agierend - durch Rückfrage beim Authentisierungszentrum des Teilnehmers eine vollständige Authentisierung durchführt.

## Patentansprüche

1. Verfahren zur Sicherung von Bedienungsvorgängen in einem Mobilfunknetz, mit Einrichtungen für die Regelung der Kommunikation zwischen Mobilvermittlungseinrichtungen und Datenbanken im Mobilvermittlungsnetz zur Steuerung des mobilen Netzzugangs von Benutzerstationen sowie für die Authentifikation des Teilnehmers und Speicherung der erforderlichen geheimen Kommunikationsdaten beim Teilnehmer, **dadurch gekennzeichnet**, daß unter Verwendung von Elementen für die Sicherung der Funkübertragung für zusätzlich zu dem eine Berechtigungskarte (SIM-Subscriber Identity Module) aufweisenden Teilnehmer zur Bedienung berechtigte Personen (Drittpersonen) eine Chip-Karte als Berechtigungsausweis vorgesehen ist, auf der die Rufnummer als Heimatort ein fiktives Authentisierungszentrum (AUC) aufweist, das an alle EDV-Anlagen des Netzbetreibers angeschlossen ist und diese in die Lage versetzt, durch Vergleich eines Antwortcodes (SRES), der sich beim Versand eines Einbuchungsantrags vom Authentisierungszentrum an eine örtliche Vermittlung durch Aussenden einer Zufallszahl als Abfragewort und daraus folgende Errechnung mit einem teilnehmerspezifischen Schlüssel ergibt, und eines weiteren Antwortcodes (SRES), der bei der Abfrage des Teilnehmers mit einer Zufallszahl durch die örtliche Vermittlung und Errechnung im SIM (Subscriber Identity Module) des Teilnehmers entsteht, die Identität der berechtigten Person zu prüfen und den für eine Gesprächsverbindung zu benutzenden Schlüssel (KC) bereitstellt für die Verwendung durch das Terminal der berechtigten Person zur Durchführung der von ihr vorzunehmenden Transaktionen.

2. Verfahren nach Anspruch 1,
**dadurch gekennzeichnet**, daß die Verwaltung aller Zugangsberechtigungen zu EDV-Verfahren und der teilnehmerspezifischen Schlüssel der berechtigten Personen im Authentisierungszentrum (Betriebs-AUC) erfolgt.

3. Verfahren nach Anspruch 1 oder 2,
**dadurch gekennzeichnet**, daß das Authentisierungszentrum (Betriebs-AUC) zentral und gesichert untergebracht ist.

4. Verfahren nach einem der Ansprüche 1 bis 4,
**dadurch gekennzeichnet**, daß die EDV-Anlagen in regionalen Zentren verteilt angeordnet sind und die berechtigten Personen sich mit ihnen von einem beliebigen Ort aus über ein beliebiges, vorzugsweise auch ein öffentliches Wählnetz in Verbindung setzen.

5. Verfahren nach einem der Ansprüche 1 bis 4,
**gekennzeichnet durch** die Erreichbarkeit des Authentisierungszentrums (Betriebs-AUC) über das Zeichengabenetz.

6. Verfahren nach einem der Ansprüche 1 bis 5,
**dadurch gekennzeichnet**, daß zur elektronischen Einbuchung bzw. Änderung von Teilnehmerdaten der elektronische Teilnehmer-Einrichtungsprozeß nach vorhergegangenem Sich-Ausweisen der berechtigten Person erfolgt und danach das SIM des betreffenden Teilnehmers im zeitlichen Wechsel oder gleichzeitig mit dem Berechtigungsausweis der berechtigten Person der (den) Leseeinrichtung(en) des verwendeten Terminals (EDV-Anlage) vorgelegt wird.

## Claims

1. Method for the protection of operating processes in a mobile radio network, having devices for the regulation of the communication between mobile switching devices and databanks in the mobile switching network for controlling the mobile network access from user stations and for the authentication of the subscriber and storage of the necessary secret communications data for the subscriber, characterized in that, using elements for the protection of the radio transmission, a smart card is provided as an authorization pass for persons (third parties) who are authorized to operate in addition to the subscriber who has an authorization card (SIM Subscriber Identity Module), on which smart card the telephone number as a home location has a fictional authentication centre (AUC) which is connected to all the EDP systems of the network operator and makes it possible for said ADP systems to check the identity of the authorized person by comparison of a response code (SRES), which results when sending a registering application from the authentication centre to a local exchange by transmitting a random number as an interrogation word and subsequent calculation using a subscriber-specific code, and a further response code (SRES), which is produced when the subscriber is interrogated with a random number by the local exchange and calculation in the SIM (Subscriber Identity Module) of the subscriber, and provides the code (KC), which is to be used for a call connection, for use by the terminal of the authorized person for carrying out the transactions to be carried out by him or her.

2. Method according to Claim 1, characterized in that the administration of all the access authorization to ADP processes and the subscriber-specific codes of the authorized persons is carried out in the authentication centre (operating AUC).

3. Method according to Claim 1 or 2, characterized in that the authentication centre (operating AUC) is accommodated centrally and in a protected manner.

4. Method according to one of Claims 1 to 4, characterized in that the ADP systems are arranged in a distributed manner in regional centres, and the authorized persons are connected to them from any location via any dialling network, preferably a public dialling network as well.

5. Method according to one of Claims 1 to 4, characterized by it being possible to access the authentication centre (operating AUC) via the signalling network.

6. Method according to one of Claims 1 to 5, characterized in that the electronic subscriber setting-up process is carried out in accordance with prior self-certification of the authorized person for electronic registration or modification of subscriber data and, after this, the SIM of the relevant subscriber is passed to the read device or devices of the terminal used (ADP system) alternately in time or at the same time as the authorization pass of the authorized person.

## Revendications

1. Procédé pour assurer la sécurité d'opérations de service dans un réseau de radiocommunication du service mobile, comportant des dispositifs pour la régulation de la communication entre des dispositifs de commutation mobiles et des banques de données dans le réseau de commutation du service mobile pour la commande de l'accès mobile au réseau de stations d'utilisateurs, ainsi que pour l'authentification de l'abonné et la mémorisation des données de communications secrètes nécessaires chez l'abonné, caractérisé en ce qu'il est prévu, moyennant l'utilisation d'éléments pour assurer la sécurité de la transmission radioélectrique pour des personnes (tiers) autorisées à utiliser le service en plus des abonnés ayant une carte d'autorisation (SIM-Subscriber Identity Module), une carte à puce comme justificatif d'autorisation, sur laquelle le numéro d'appel comporte, comme lieu de rattachement, un centre (AUC) d'autorisation fictif, qui est connecté à toutes les installations électroniques de traitement de données de l'exploitant du réseau et qui met celles-ci en mesure, par comparaison d'un mot (SRES) de réponse, qui apparaît lors de l'envoi d'une demande d'enregistrement du centre d'autorisation à un central local par émission d'un nombre aléatoire en tant que mot d'interrogation, puis par calcul par une clé spécifique de l'abonné, et d'un autre code (SRES) de réponse, qui apparaît lors de l'interrogation de l'abonné par un nombre aléatoire par le central local et par calcul dans la SIM (Subscriber Identity Module) de l'abonné, de vérifier l'identité de la personne autorisée, et qui tient prête la clé (KC) à utiliser pour une liaison de conversation pour qu'elle soit utilisée par le terminal de la personne autorisée pour qu'elle fasse les transactions auxquelles elle doit procéder.

2. Procédé suivant la revendication 1,
caractérisé en ce que
on effectue la gestion de toutes les autorisations d'accès à des procédés électroniques de traitement des données et des clés spécifiques des abonnés des personnes autorisées dans le centre d'autorisation (AUC de fonctionnement).

3. Procédé suivant la revendication 1 ou 2
caractérisé en ce que
le centre d'autorisation (AUC de fonctionnement) est central et protégé.

4. Procédé suivant l'une des revendications 1 à 4,
caractérisé en ce que les installations électroniques de traitement de données sont disposées en étant réparties dans des centres régionaux et les personnes autorisées se mettent en liaison avec eux à partir d'un lieu quelconque par l'intermédiaire d'un réseau commuté quelconque, de préférence un réseau commuté public.

5. Procédé suivant l'une des revendications 1 à 4,
caractérisé par la possibilité d'atteindre le centre d'autorisation (AUC de fonctionnement) par l'intermédiaire du réseau sémaphore.

6. Procédé suivant l'une des revendications 1 à 5,
caractérisé en ce que pour l'enregistrement électronique ou le changement de données d'abonné, on met en oeuvre le processus électronique de raccordement d'abonné après que la personne autorisée a spécifié elle-même son identité, puis la SIM de l'abonné concerné est présentée alternativement dans le temps ou en même temps avec le justificatif de l'autorisation de la personne autorisée au(x) dispositif(s) de lecture du terminal utilisé (installation électronique de traitement de données).
